# EUROPEAN PATENT SPECIFICATION

(11) **EP 0 435 169 B1**
(45) Date of publication and mention of the grant of the patent: **06.03.1996**
(21) Application number: 90124915.1
(22) Date of filing: 20.12.1990
(51) Int. Cl.: G06F 17/30, G11B 27/10, G11B 27/28, G11B 27/34

(54) **Image display system and method of displaying an image therewith**
Bildanzeigevorrichtung und Verfahren zum Anzeigen eines Bildes mit dieser Vorrichtung
Dispositif d'affichage d'images et méthode pour afficher une image avec un tel dispositif

(30) Priority: 26.12.1989 JP 335186/89
(43) Date of publication of application: 03.07.1991
(73) Proprietor: HITACHI SCIENCE SYSTEMS LTD, Hitachinaka-shi, Ibaraki-ken (JP)
(72) Inventor: Nakayama, Yoshihiko, Mito-shi (JP); Kawamata, Shigeru, Higashiibaraki-gun, Ibaraki-ken (JP); Takashima, Masaya, Hitachi Naka Seiki K. K., Ichige, Katsuta-shi (JP); Numata, Yoshinori, Katsuta-shi (JP)
(74) Representative: Patentanwälte Beetz - Timpe - Siegfried Schmitt-Fumian - Mayr

(56) References cited:
- EP-A- 0 327 931
- EP-A- 0 338 753
- DE-A- 3 401 678
- DE-A- 3 446 593
- US-A- 3 757 037
- US-A- 4 802 019
- PATENT ABSTRACTS OF JAPAN vol. 11, no. 253 (P-606)18 August 1987 & JP-A-62 058 374
- PATENT ABSTRACTS OF JAPAN vol. 12, no. 93 (P-680)26 March 1988 & JP-A-62 226 375

## Description

The present invention relates to an image display system for reading and outputting image data or information from a recording medium in which a plurality of image data are recorded.

In order that desired image data can be rapidly selected from a recording medium such as an optical disk or a magnetic disk in which a plurality of image data are recorded, the prior art has employed a method in which character data briefly explaining the contents of respective image data are preliminarily provided as indices and the selection of image data is made referring to the indices.

However, it is difficult to accurately represent the content of each image data by only the character data. More especially, in order to display desired image data, it is required to confirm actual image data in such a manner that some files which may be regarded as being the desired image data are loaded from a recording medium in reference to the character data. Therefore, it is difficult to rapidly select the desired image data.

In order to solve the above problem, there has been proposed a technique, as disclosed by, for example, JP-A-58-77383 or JP-A-58-120382 and shown in (a) of Fig. 5, in which each image data is reduced, a plurality of reduced image data (for example, sixteen data No. 1 to No. 16) are simultaneously displayed as indices on a display device and desired image data is selected while seeing the reduced image data as displayed. Also, JP-A-62-248376 has proposed a technique which enables to provide more information or data to an operator by displaying character data in a form of superimposition on such reduced image data as mentioned above.

When a file having desired image data registered therein is to be specified among a multiplicity of files, there may be the case where the unnecessity of a certain file can be clearly judged by merely referring to character data. In the above-mentioned prior art, however, since all the reduced versions of respective image data are to be displayed, reduced image data indicative of the image data of a clearly unnecessary file will be also displayed. A similar system is known from JP-A-62-058374 which discloses the precharacterizing features of claims 1 and 8.

Accordingly, the above prior art involves a problem that a long access time is required for index display and a display screen or displayed image is hard to see.

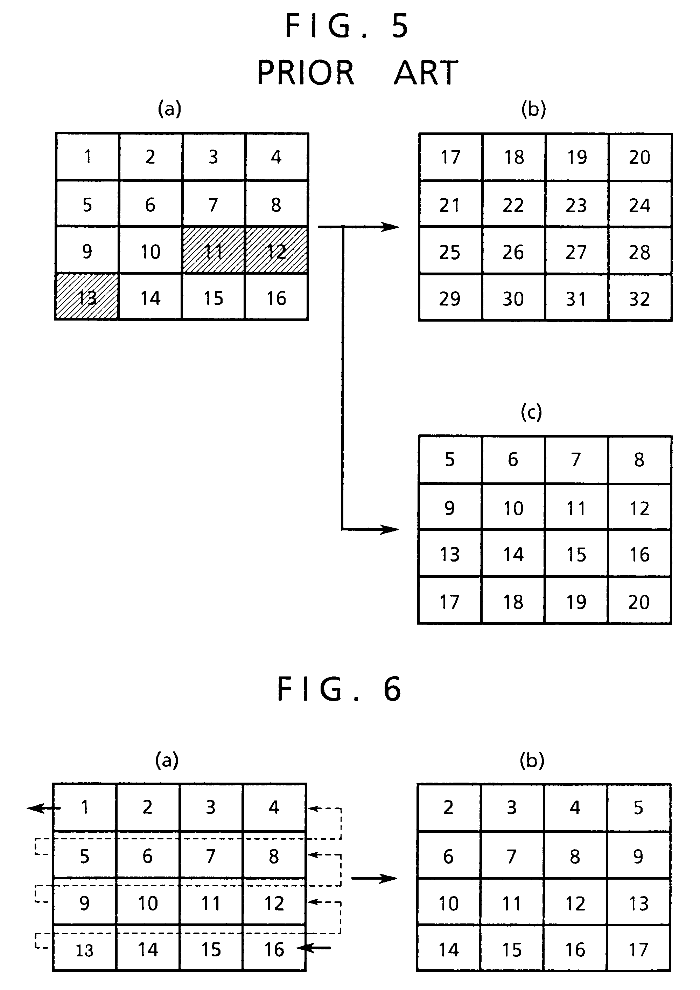

Also, in the above prior art, in the case where the reduced versions of all image data cannot be displayed at a time because a multiplicity of files exist, the contents as displayed must be scrolled by, for example, a method (1) all of reduced image data on the display screen are replaced simultaneously, as shown in (b) of Fig. 5 or a method (2) in which the reduced image data are shifted upward or downward one row by one row, as shown in (c) of Fig. 5.

In the case where image data to be displayed is to be specified referring to its reduced image data, desired image data is generally selected by displaying some reduced image data on the same display screen and comparing them with each other. In general, the sequence of registration of files in a recording medium is such that files similar to each other are registered adjacent to each other. Therefore, in many cases, the above-mentioned comparison of reduced image data with each other is made between files near to each other (for example, files No. 11 and No. 12, files No. 12 and No. 13 or files No. 11 and No. 13). However, in each of the above scrolling methods (1) and (2), even if the comparison of, for example, files No. 12 and No. 13 or files No. 11 and 13 is desired, there is a problem that the comparison is difficult since the files to be compared are displayed at positions apart from each other.

Also, in applications including the case where such an image display system as mentioned above is used for recording of images observed by an electron microscope or the like, it is preferable that indices of a plurality of files concerning one sample are simultaneously displayed. However, a delimitation determining a range of files capable of being displayed simultaneously on the same display screen automatically generates at every sixteen files such as between files No. 16 and No. 17 or between files No. 32 and No. 33 in the case of the above scrolling method (1) and at every four files such as between files No. 4 and No. 5 or between files No. 8 and No. 9 in the case of the scrolling method (2). Accordingly, for example, in the case where files concerning one samply spans an area from a file No. 12 to a file No. 26, the delimitation generates between files No. 16 and No. 17 in the scrolling method (1) and between files No. 24 and No. 25 in the scrolling method (2). Therefore, there is a problem that there may be the case where a plurality of reduced image data concerning one sample cannot be displayed simultaneously.

The object of the present invention is to solve the above problems or to provide an image display system in which reduced image data displayed as indices can be easily compared with each other.

To solve the above-mentioned problems involved by the prior art, in the present invention, an image display system having reduced image data and/or character data of each image data as an index is provided with a construction (1) which comprises means for displaying a multiplicity of character data, means for displaying only reduced image data designated on the basis of the character data together with the character data, and means for newly displaying image data designated on the basis of at least one of the character data and the reduced image data or a construction (2) which comprises a reduced image data memory for reading reduced image data of each image data from a recording medium and storing it, means for displaying the reduced image data in the reduced image data memory in a predetermined two-dimensional arrangement, and means for scrolling the reduced image data so that the reduced image data are shifted in accordance with the sequence of arrangement thereof and new reduced image data is additionally displayed at the tail end with respect to the direction of shifting.

With the above construction(1), since only desired reduced image data can be displayed selectively, the comparison of reduced image data with each other is facilitated, thereby making it possible to rapidly specify a desired file. Also, since only reduced image data necessary for specifying a desired file can be displayed, a time required for index display can be shortened, thereby making it possible to reduce the capacity of a memory which stores reduced image data.

With the above construction (2), since reduced image data can be scrolled one by one, a delimitation determining a range of files capable of being displayed simultaneously on the same display screen can be established at any position. Accordingly, it becomes possible to simultaneously display reduced image data of files which span any desired range. As a result, it is possible to facilitate the comparison of reduced image data, and so on, thereby making it possible to to rapidly specify a desired file.
Fig. 1 is a block diagram of an image recording/reproducing system which is an embodiment of the present invention;
Fig. 2 is a block diagram of an image recording/reproducing system which is another embodiment of the present invention;
Figs. 3 and 4 are views showing an index displaying method by the image recording/reproducing system shown in Fig. 1;
Fig. 5 is a view for explaining the prior art; and
Fig. 6 is a view showing an index scrolling method by the image recording/reproducing system shown in Fig. 2.

The present invention will now be explained in detail in reference with the accompanying drawings.

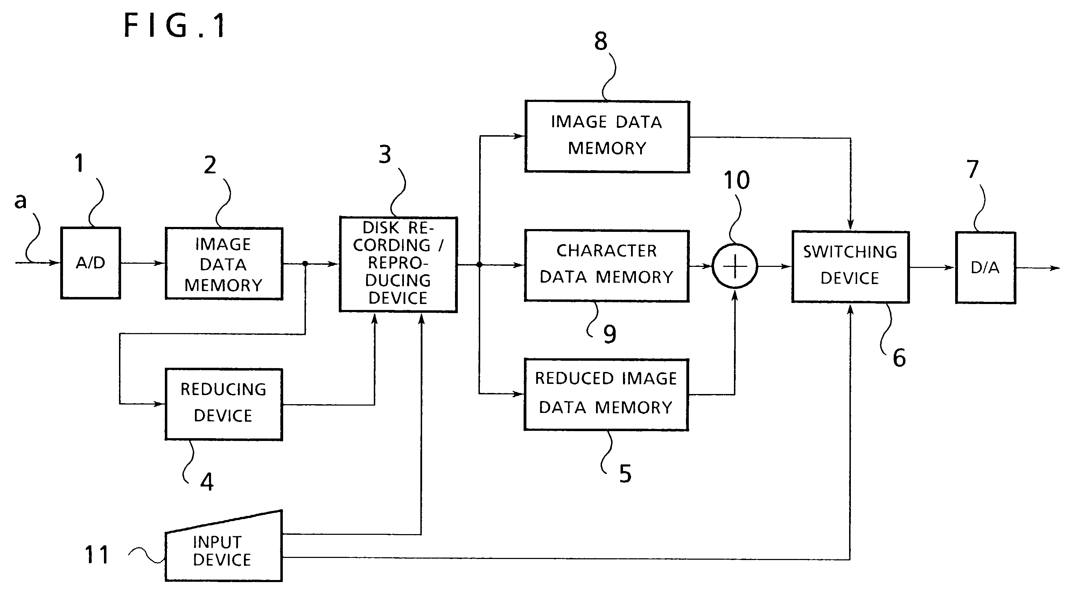

Fig. 1 is a block diagram of an image recording/reproducing system which is an embodiment of the present invention. In the figure, an input video signal a is converted into a digital signal by an A/D converter 1 and image data for one frame are written into an image data memory 2. An output read from the image data memory 2 is inputted to a disk recording/reproducing device 3 and recorded therein.

The output of the image data memory 3 is also inputted to a reducing device 4 which in turn reduces the image data to, for example, 1/4 and outputs the reduced image data to the disk recording/reproducing device 3. The 1/4 reduction by the reducing device 4 is made by thinning out three among four scanning lines of the image data while picking up pixels at intervals of every four pixels in the direction of scan of the scanning line.

In the disk recording/reproducing device 3, the inputted reduced image data is recorded into an index record area. At this time, an operator operates an input device 11 to input character data which in turn is registered into the index record area in which the reduced image data is recorded.

By the repetition of the above recording operation, a plurality of image data and indices thereof are recorded in the disk.

Upon reproduction, on the other hand, the operator operates the input device 11 to instruct index display. At this time, only character data are firstly read by the disk recording/reproducing device 3 and the read character data are supplied to a character data memory 9. Also, a switching device 6 is controlled so that an output signal of an adder 10 is inputted to a D/A converter 7.

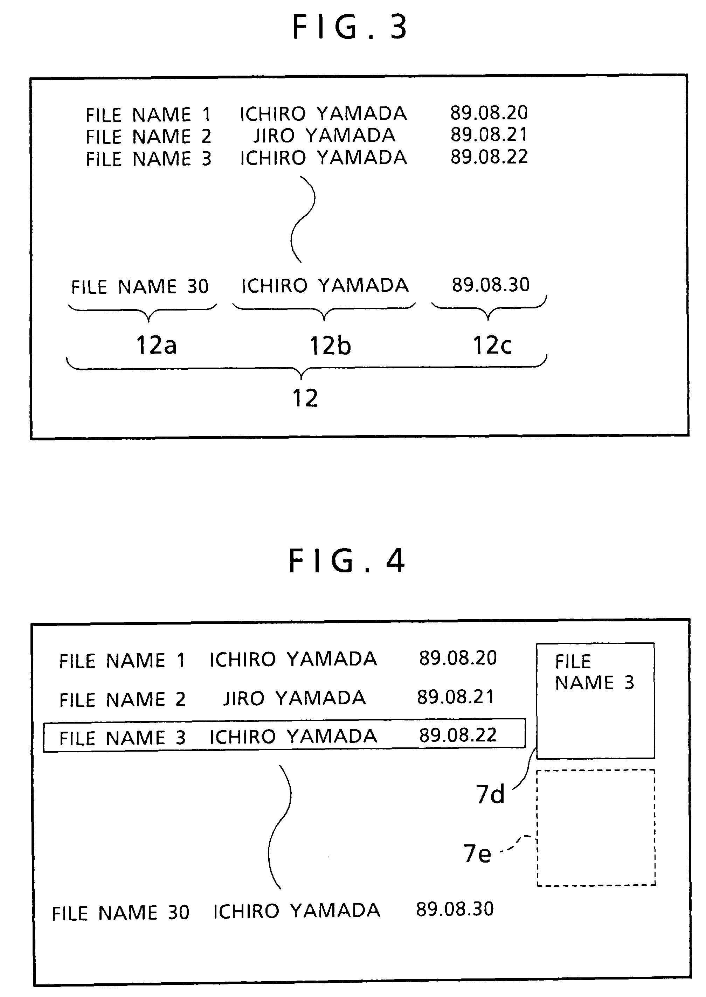

An output signal of the character data memory 9 is inputted to the D/A converter 7 through the adder 10 and the switching device 6 and only character data 12 are displayed on the display screen of a display device, as shown in Fig. 3. The character data 12 is usually composed of a file name 12a, a file producer name 12b, a file production date 12c, and so on.

Referring to the displayed character data, the operator operates the input device 11 to select a file designated by, for example, the file name 3. Further, when the operator instructs the display of image data of the designated file, the image data of that file is read by the disk recording/reproducing device 3 and the read image data to be displayed is outputted to an image data memory 8. Also, the switching device 6 is controlled so that an output signal of the image data memory 8 is inputted to the D/A converter 7.

The output signal of the image data memory 8 is inputted through the switching device 6 to the D/A converter 7 and the image data of the file designated by the file name 3 is displayed in place of the character data on the display device.

In the case where a desired file cannot be specified by merely referring to character data, the operator operates the input device 11 to select one of files which may be regarded as being desired file and further to instruct the display of reduced image data of the selected file. Then, a file name 12a, a file producer name 12b and a file production date 12c of the selected file are marked (for example, enclosed by a frame or flickered) while the reduced image data of the selected file is read by the disk recording/reproducing device 3 and is outputted to a reduced image data memory 5.

An output signal of the reduced image data memory 5 is superimposed on display data concerning the relevant character data by the adder 10 and the superimposed display data is inputted to the D/A converter 7 through the switching device 6 so that character data and reduced image data 7d is displayed on the display device, as shown in Fig. 4.

The operator refers to the reduced image data. When the reduced image data is one of the desired image data, the operator instructs the display of image data of the relevant file by operating the input device 11. On the other hand, when the reduced image data is not one of the desired image data, the operator operates the input device 11 to instruct the display of the reduced image data of image data of another file.

The reduced image data of the other file thus designated may be newly displayed in place of the reduced image data 7d or may be displayed at a position adjacent to the reduced image data 7d.

When the desired file is thus selected, only the image data of the desired file is displayed in place of the character data and reduced image data on the display screen in a similar manner to that mentioned above.

The number of files the reduced image data of which can be simultaneously displayed referring to the character data is not limited to one. If a plurality of files (for example, two files) are designated simultaneously, the reduced image data of an additional file can be simultaneously displayed at a position 7e as shown by dotted line in Fig. 4.

In the case where a plurality of reduced image data are thus displayed, it is preferable that a file name of each reduced image data is displayed in a form of superimposition on the reduced image data or in the vicinity of the reduced image data.

According to the present embodiment, since the reduced image data of a file(s) necessary for specifying a desired file is displayed in the case where the desired file cannot be specified by only the reference to character data, a time required for index display can be reduced to 1/10 or less of that in the prior art. Moreover, since the capacity of the memory for storing reduced image data can be reduced, it is possible to make the size of the system small.

Further, even in the case where the comparison of two or three files is desired, respective reduced image data thereof are displayed adjacent to each other by instructing the display of the reduced image data. Therefore, the comparison of files can be made easily as compared with the prior art.

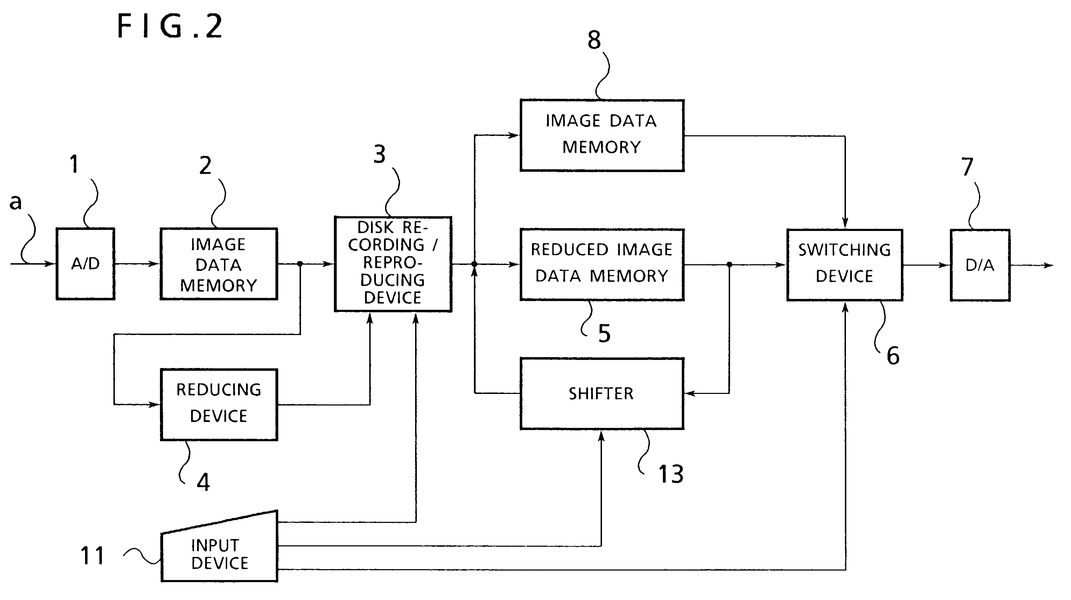

Fig. 2 is a block diagram of an image recording/ reproducing system which is another embodiment of the present invention. In Fig. 2, the same reference numerals as those in Fig. 1 designate the same parts as those in Fig. 1 or parts equivalent thereto.

In Fig. 2, a reduced image data memory 5 is connected to a shifter 13 which shifts the storage position of data in the memory 5. Unlike the preceding embodiment, an index in the present embodiment is formed by only reduced image data.

When desired image data is to be reproduced by the image recording/reproducing system having the above construction, an operator operates an input device 11 to instruct index display so that a plurality of reduced image data, for example, sixteen reduced image data as indices of files No. 1 to No. 16 are read by a disk recording/reproducing device 3 and the read reduced image data are outputted to a reduced image data memory 5 and are two-dimensionally recorded therein in a predetermined arrangement.

Also, a switching device 6 is controlled so that an output signal of the reduced image data memory 5 is inputted to a D/A converter 7.

The output signal of the reduced image data memory 5 is inputted through the switching device 6 to the D/A converter 7 and only the reduced image data of files No. 1 to No. 16 are displayed as indices on a display device, as shown in (a) of Fig. 6.

At this stage of time, the operator operates the input device 11 in reference to the reduced image data to select a file designated by, for example, a file name 3. Then, only the image data of the selected file is read by the disk recording/reproducing device 3 and the read image data is outputted to an image data memory 8. Also, the switching device 6 is controlled so that an output signal of the image data memory 8 is inputted to the D/A converter 7.

The output signal of the image data memory 8 is inputted through the switching device 6 to the D/A converter 7 and the image data of the designated file is displayed in place of the reduced image data on the display device.

In the case where it is not possible to confirm a desired file among the displayed reduced image data, the operator operates the input device 11 to instruct the scrolling of reduced image data.

When the scrolling of reduced image data is instructed, the shifter 13 shifts the storage positions of reduced image data of files in the reduced image data memory 5 one by one in accordance with the direction of scrolling and in accordance with the sequence of arrangement of reduced image data, for example, so that reduced image data 2, 3, ..., and 16 are stored at positions of reduced image data 1, 2, ..., and 15, respectively.

After the above shifting has been completed, the reduced image of a file 17 is read from the disk recording/reproducing device 3 and is stored at the tail end with respect to the direction of shifting of storage position, that is, at a position where the reduced image data 16 was previously stored.

In the case where the scrolling in a reverse direction is instructed, the storage positions of reduced image data may be shifted one by one in accordance with the sequence of arrangement of reduced image data, in a similar manner to that mentioned above, for example, so that reduced image 15 and 14 are stored at positions of reduced image data 16 and 15, respectively and another reduced image data is newly stored at a position where reduced image data 1 was proviously stored.

After the shifting of reduced image data has been completed entirely, the reduced image data of the reduced image data memory 5 are outputted in a similar manner to that mentioned above so that as shown in (b) of Fig. 6 are displayed on the display device.

The display scrolling method is not limited to the disclosed and shown method. For example, when the scrolling is instructed in a state in which reduced image data of the 5th to 20th files are being displayed, a read range of reduced image data may be changed such that reduced image data of the 6th to 21st files are newly read from the disk recording/reproducing device 3 or such that reduced image data of the 4th to 19th files are newly read from the disk recording/reproducing device 3 in the case where the scrolling in the reverse direction is instructed.

According to the present embodiment, since reduced image data can be scrolled one by one, a delimitation determining a range of files capable of being displayed simultaneously can be established at any position. Accordingly, it becomes possible to simultaneously display the reduced image data of files which span any desired range, thereby facilitating the comparison of files, and so on.

In this case, reduced image data with character data may be scrolled in which the whole or a part of character data associated with the reduced image data is added to the reduced image data at a corner, lower end, upper end or side thereof. The character data may be superimposed on the reduced image data or may be annexed to the reduced image data.

As apparent from the foregoing, the present invention achieves the following effects.
(1) Since the index display is made in such a manner that a multiplicity of character data are firstly displayed and only desired reduced image data is selectively displayed, the comparison of reduced image data becomes easy, thereby making it possible to rapidly specify a desired file. Also, since only reduced image data necessary for specifying a desired file is displayed, a time required for index display can be shortened. Moreover, since the capacity of a memory for storing reduced image data can be reduced, it is possible to make the size of the system small.
(2) According to the disclosed scrolling method, since reduced image data can be scrolled one by one, a delimitation determining a range of files capable of being displayed simultaneously can be established at any position. Accordingly, it becomes possible to simultaneously display the reduced image data of files which span any desired range, thereby facilitating the comparison of reduced image data and hence making it possible to rapidly specify a desired file.

## Claims

1. Method for displaying an image on an image screen using character data corresponding to images and reduced image data corresponding to the character data, prestored on a recording medium for being displayed on the image screen, including the step of:
- displaying a plurality of character data corresponding to the prestored images on the image screen,
and being **characterized** by the following steps:
- displaying reduced image data being designated on the basis of at least one selected character data on the image screen together with the character data and
- displaying in place of the character data and the reduced image data a prestored image in response to the selection of at least one of the corresponding reduced image and character data displayed on the image screen.

2. Method according to claim 1,
characterized in that
the display contents of the image screen are switched from the character data and the reduced image data to the image data.

3. Method according to claim 1 or 2,
characterized in that
character data concerning the reduced image data displayed is marked.

4. Method according to at least one of claims 1 to 3,
characterized in that
two or more reduced image data are displayed and character data concerning each reduced image data is displayed in association with the reduced image data.

5. Method according to at least one of claims 1 to 4,
characterized in that
reduced image data are displayed in a predetermined two-dimensional arrangement, and
the reduced image data are scrolled so that the reduced image data are shifted in accordance with the sequence of arrangement thereof and new reduced image data is additionally displayed at a tail end with respect to the direction of shifting.

6. Method according to at least one of claims 1 to 5,
characterized in that
a range of reduced image data which are read from the recording medium (3) is changed.

7. Method according to at least one of claims 1 to 6,
characterized in that
the storage positions of reduced image data are shifted in accordance with the sequence of arrangement thereof and new reduced image data read from the recording medium (3) are added in accordance with the direction of shifting to the tail end with respect to the direction of shifting.

8. Apparatus for displaying an image on an image screen with a recording medium (3) having stored thereon index data being composed of character data corresponding to prestored images and reduced image data corresponding to the character data for being displayed on the image screen, including a character data memory (9), a reduced image data memory (5) and an image data memory (8) for storing character data, reduced image data and image data read from the recording medium (3), including
- means for displaying a plurality of character data corresponding to the prestored images on the image screen,
characterized by
- means for displaying reduced image data designated on the basis of at least one selected character data on the image screen together with the character data
and
- means for displaying in place of the character data and the reduced image data the prestored image in response to the selection of at least one of the corresponding reduced image and character data displayed on the image screen.

9. Apparatus according to claim 8,
characterized in that
the display contents of the image screen are switched from the character data and the reduced image data to the image data by display switching means (6, 11).

10. Apparatus according to claim 8 or 9,
characterized in that
character data concerning the reduced image data displayed is marked.

11. Apparatus according to at least one of claims 8 to 10,
characterized in that
two or more reduced image data are displayed and character data concerning each reduced image data is displayed in association with the reduced image data.

12. Apparatus according to at least one of claims 8 to 11,
characterized in that
the reduced image data are displayed in said reduced image data memory (5) in a predetermined two-dimensional arrangement, and
the reduced image data are scrolled by means (13) so that the reduced image data are shifted in accordance with the sequence of arrangement thereof and new reduced image data is additionally displayed at a tail end with respect to the direction of shifting.

13. Apparatus according to at least one of claims 9 to 12,
characterized in that
a range of reduced image data which are read from the recording medium (3) is changed by the scrolling means (13).

14. Apparatus according to at least one of claims 8 to 13,
characterized in that
the storage positions of reduced image data are shifted by shifting means in accordance with the sequence of arrangement thereof and new reduced image data read from the recording medium (3) are added in accordance with the direction of shifting to the tail end with respect to the direction of shifting.

## Patentansprüche

1. Verfahren zum Anzeigen eines Bilds auf einem Bildschirm unter Verwendung von Zeichendaten, die Bildund reduzierten Bilddaten entsprechen und auf einem Aufzeichnungsmedium vorgespeichert sind, zum Darstellen derselben auf dem Bildschirm, wobei:
- mehreren Zeichendaten entsprechend den vorgespeicherten Bildern auf dem Bildschirm angezeigt werden,
gekennzeichnet durch die folgenden Schritte:
- Darstellen von reduzierten Bilddaten auf dem Bildschirm zusammen mit den Zeichendaten, wobei die Bilddaten basierend auf zumindest einer ausgewählten Zeicheninformation identifiziert werden und
- Darstellen, anstatt der Zeichendaten und der reduzierten Bilddaten, eines vorgespeicherten Bilds in Reaktion auf die Auswahl der zumindest einen entsprechenden, reduzierten Bild- und Zeicheninformation, die auf dem Bildschirm dargestellt sind.

2. Verfahren nach Anspruch 1, dadurch gekennzeichnet, daß die Anzeigeinhalte des Bildschirms von den Zeichendaten und den reduzierten Bilddaten zu den Bilddaten umgeschalten werden.

3. Verfahren nach Anspruch 1 oder 2, dadurch gekennzeichnet, daß die Zeichendaten betreffend den dargestellten reduzierten Bilddaten markiert werden.

4. Verfahren nach zumindest einem der Ansprüche 1 bis 3, dadurch gekennzeichnet, daß zwei oder mehr reduzierte Bilddaten dargestellt werden und Zeichendaten betreffend jeder reduzierten Bildinformation in Zusammenhang mit den reduzierten Bilddaten dargestellt werden.

5. Verfahren nach zumindest einem der Ansprüche 1 bis 4, dadurch gekennzeichnet, daß reduzierte Bilddaten in einer vorbestimmten zweidimensionalen Anordnung dargestellt werden und die reduzierten Bilddaten derart geblättert werden, daß die reduzierten Bilddaten gemäß der Anordnungssequenz derselben verschoben werden und daß die neue reduzierte Bildinformation zusätzlich an einem Ende entsprechend der Verschieberichtung dargestellt wird.

6. Verfahren nach zumindest einem der Ansprüche 1 bis 5, dadurch gekennzeichnet, daß ein Bereich von von dem Aufzeichnungsmedium (3) gelesenen reduzierten Bilddaten geändert wird.

7. Verfahren nach zumindest einem der Ansprüche 1 bis 6, dadurch gekennzeichnet, daß die Speicherpositionen der reduzierten Bilddaten entsprechend der Anordnungssequenz derselben verschoben werden und neue reduzierte Bilddaten, gelesen von dem Aufzeichnungsmedium (3), gemäß der Verschieberichtung am Ende hinzuaddiert werden, entsprechend der Verschieberichtung.

8. Vorrichtung zum Darstellen eines Bilds auf einem Bildschirm, mit einem Aufzeichnungsmedium (3), welches gespeicherte Indexdaten aufweist, die aus Zeichendaten bestehen, welche vorgespeicherten Bild- und reduzierten Bilddaten entsprechen, wiederum entsprechend zu den Zeichendaten, zum Darstellen derselben auf dem Bildschirm, weiterhin mit einem Zeichendatenspeicher (9), einem Speicher (5) für reduzierte Bilddaten und einem Bilddatenspeicher (8) zum Speichern von Zeichendaten, reduzierten Bilddaten und Bilddaten, gelesen von dem Aufzeichnungsmedium (3), weiterhin mit
- Mittel zum Darstellen von mehreren Bilddaten auf einem Bildschirm, entsprechend den vorgespeicherten Bildern,
gekennzeichnet durch
- Mittel zum Darstellen von reduzierten Bilddaten, identifiziert basierend auf zumindest einer ausgewählten Zeicheninformation, auf dem Bildschirm zusammen mit den Zeichendaten und
- Mittel zum Darstellen des vorgespeicherten Bilds in Reaktion auf die Auswahl von zumindest einer der entsprechenden reduzierten Bild- und Zeicheninformation, dargestellt auf dem Bildschirm.

9. Vorrichtung nach Anspruch 8, dadurch gekennzeichnet, daß die auf dem Bildschirm angezeigten Inhalte von den Zeichendaten und den reduzierten Bilddaten zu den Bilddaten durch Anzeigeschaltmittel (6, 11) umgeschaltet werden.

10. Vorrichtung nach Anspruch 8 oder 9, dadurch gekennzeichnet, daß Zeicheninformation entsprechend den angezeigten, reduzierten Bilddaten markiert wird.

11. Vorrichtung nach zumindest einem der Ansprüche 8 bis 10, dadurch gekennzeichnet, daß zwei oder mehr reduzierte Bilddaten angezeigt werden und eine Zeicheninformation entsprechend jeder reduzierten Bildinformation im Zusammenhang mit den reduzierten Bilddaten dargestellt wird.

12. Vorrichtung nach zumindest einem der Ansprüche 8 bis 11, dadurch gekennzeichnet, daß die reduzierten Bilddaten in den reduzierten Bilddatenspeicher (5) in einer vorbestimmten zweidimensionalen Anordnung dargestellt werden und
die reduzierten Bilddaten durch Mittel (13) derart geblättert werden, daß die reduzierten Bilddaten gemäß der Anordnungssequenz derselben verschoben werden und eine neue reduzierte Bildinformation zusätzlich am Ende entsprechend der Verschieberichtung dargestellt wird.

13. Vorrichtung nach zumindest einem der Ansprüche 9 bis 12, dadurch gekennzeichnet, daß ein Bereich von reduzierten Bilddaten, welche von dem Aufzeichnungsmedium (3) gelesen werden, durch die Mittel (13) zum Blättern geändert wird.

14. Vorrichtung nach zumindest einem der Ansprüche 8 bis 13, dadurch gekennzeichnet, daß die Speicherpositionen der reduzierten Bilddaten durch die Verschiebemittel entsprechend der Anornungssequenz derselben verschoben werden und daß neue reduzierte Bilddaten, gelesen von dem Aufzeichnungmedium (3), gemäß der Verschieberichtung am Ende, entsprechend der Verschieberichtung, addiert werden.

## Revendications

1. Procédé permettant d'afficher une image sur un écran d'image à l'aide de données de caractères correspondant à des images et de données d'images réduites correspondant aux données de caractères, prémémorisées sur un support d'enregistrement en vue de leur affichage sur l'écran d'image, comportant l'opération suivante :
- afficher sur l'écran d'image une pluralité de données de caractères correspondant aux images prémémorisées,
et étant caractérisé par les opérations suivantes :
- afficher sur l'écran d'image une donnée d'image réduite qui est désignée sur la base d'au moins une donnée de caractère sélectionnée, ainsi que la donnée de caractère, et
- afficher, à la place de la donnée de caractère et de la donnée d'image réduite, une image prémémorisée en réponse à la sélection d'au moins l'une des données que constituent la donnée d'image réduite et la donnée de caractère correspondantes affichées sur l'écran d'image.

2. Procédé selon la revendication 1, caractérisé en ce que le contenu d'affichage de l'écran d'image commute de la donnée de caractère et de la donnée d'image à la donnée d'image.

3. Procédé selon la revendication 1 ou 2, caractérisé en ce que la donnée de caractère concernant la donnée d'image réduite affichée est repérée.

4. Procédé selon l'une quelconque des revendications 1 à 3, caractérisée en ce que deux données d'images réduites ou plus sont affichées et la donnée de caractère concernant chaque donnée d'image réduite est affichée en association avec la donnée d'image réduite.

5. Procédé selon l'une quelconque des revendications 1 à 4, caractérisé en ce que des données d'images réduites sont affichées suivant une disposition bidimensionnelle prédéterminée, et on fait défiler, ou dérouler, les données d'images réduites de façon que les données d'images réduites se déplacent selon la succession de leur disposition et qu'une nouvelle donnée d'image réduite s'affiche supplémentairement à l'extrémité de queue, par rapport au sens de déplacement.

6. Procédé selon l'une quelconque des revendications 1 à 5, caractérisé en ce qu'on modifie l'étendue de données d'images réduites qui sont lues dans le support d'enregistrement (3).

7. Procédé selon l'une quelconque des revendications 1 à 6, caractérisé en ce que les positions de mémorisation des données d'images réduites se déplacent en fonction de la succession de leur disposition et que de nouvelles données d'images réduites lues dans le support d'enregistrement (3) s'ajoutent, suivant le sens de défilement, à l'extrémité de queue, par rapport au sens de déplacement.

8. Appareil destiné à afficher une image sur un écran d'image, un support d'enregistrement (3) mémorisant des données d'index qui sont composées de données de caractères correspondant à des images prémémorisées et de données d'images réduites correspondant aux données de caractères en vue de leur affichage sur l'écran d'image, comportant une mémoire (9) de données de caractères, une mémoire (5) de données d'images réduites et une mémoire (8) de données d'images, qui sont destinées à mémoriser des données de caractères, des données d'images réduites et des données d'images lues dans le support d'enregistrement (3), comportant :
- un moyen servant à afficher sur l'écran d'image une pluralité de données de caractères correspondant aux images prémémorisées,
caractérisé par :
- un moyen servant à afficher sur l'écran d'image une donnée d'image réduite désignée sur la base d'au moins une donnée de caractère sélectionnée, ainsi que la donnée de caractère, et
- un moyen servant à afficher, à la place de la donnée de caractère et de la donnée d'image réduite, l'image prémémorisée en réponse à la sélection d'au moins une des données que constituent une donnée d'image réduite et une donnée de caractère correspondantes affichées sur l'écran d'image.

9. Appareil selon la revendication 8, caractérisé en ce que le contenu d'affichage de l'écran d'image commute de la donnée de caractère et de la donnée d'image réduite à la donnée d'image sous l'action d'un moyen (6, 11) de commutation d'affichage.

10. Appareil selon la revendication 8 ou 9, caractérisé en ce que la donnée de caractère concernant la donnée d'image réduite affichée est repérée.

11. Appareil selon l'une quelconque des revendications 8 à 10, caractérisé en ce que deux données d'images réduites ou plus sont affichées et la donnée de caractère concernant chaque donnée d'image réduite est affichée en association avec la donnée d'image réduite.

12. Procédé selon l'une quelconque des revendications 8 à 11, caractérisé en ce que les données d'images réduites sont affichées dans ladite mémoire (5) de données d'images réduites suivant une disposition bidimensionnelle prédéterminée, et les données d'images réduites subissent un défilement, ou déroulement, sous l'action d'un moyen (13) de façon que les données d'images réduites soient déplacées en fonction de la succession de leur disposition et qu'une nouvelle donnée d'image réduite soit affichée supplémentairement à une extrémité de queue, par rapport au sens de déplacement.

13. Appareil selon l'une quelconque des revendications 9 à 12, caractérisé en ce que l'étendue de données d'images réduites qui sont lues dans le support d'enregistrement (3) est modifiée par le moyen de défilement (13).

14. Appareil selon l'une quelconque des revendications 8 à 13, caractérisé en ce que les positions de mémorisation des données d'images réduites sont déplacées par le moyen de déplacement en fonction de la succession de leur disposition et des nouvelles données d'images réduites lues dans le support d'enregistrement (3) sont ajoutées, suivant le sens de déplacement, à l'extrémité de queue, par rapport au sens de déplacement.
